# EUROPEAN PATENT APPLICATION

(11) **EP 2 982 552 A1**
(43) Date of publication of application: **10.02.2016**
(21) Application number: 15179226.4
(22) Date of filing: 31.07.2015
(51) Int. Cl.: B60S 9/06

(54) **A METHOD FOR RETROFITTING AN ELECTRIC DRIVE ON A STABILIZER LEG OF A VEHICLE, A RETROFITTABLE ELECTRICAL DRIVE SYSTEM FOR A STABILIZER LEG OF A VEHICLE, AND A TRAILER RETROFITTED WITH THE ELECTRICAL DRIVE SYSTEM**

(30) Priority: 08.08.2014 DK 201400444
(71) Applicant: Dancar Autosikring Aps, 2640 Hedehusene (DK)
(72) Inventor: HANSEN, Jørgen Kruse, 2640 Hedehusene (DK)
(74) Representative: Awapatent A/S

(57) **Abstract**

The present invention relates to a method and a system for retrofitting an electric drive on a stabilizer leg (1) attached to a vehicle. The system comprises an electrical drive (7) comprising an electric motor accommodated in a motor housing part (8) and connected via a flexible transmission (9) to a drive member (10) in a drive part (11). The drive member (10) has thickness and a through aperture (12) adapted for engagement with the predetermined cross-sectional shape of the engagement member (5), and the thickness of the drive member (10) is less than the length of the engagement member (5). The drive member (10) is fitted over the engagement member (5) along a part of the length of the engagement member (5), so as to leave at least some of said length of the engagement member (5) protruding through the drive member (10). A retrofitted vehicle is thus provided.

## Description

The present invention relates to a method for retrofitting an electric drive on a stabilizer leg of a vehicle, such as a caravan, as well as to a retro-fittable electrical drive system for a stabilizer leg of a vehicle, and vehicle retrofitted with the electrical drive system.

Vehicles such as caravans, trailer tents, and motorhomes normally comprise stabilizer legs which may be lowered to support and level the vehicle during camping. Typically there are four stabilizer legs hidden away under the vehicle, one in each corner of the vehicle.

Traditionally such legs have been manually operated by attaching a suitable tool to an engagement member of the operating member of the leg, the engagement member normally being a 19 mm hexagon, and the tool being a hand crank or an electrical hand tool with suitable socket.

This traditional process involves working in an awkward position getting down on your knees or squatting at all four corners of vehicle, which is not always a pleasure, especially if it is raining and the soil is muddy, or if darkness makes it difficult to see the operating member.

There is therefore an interest in electrically operated stabilizer legs, which may e.g. be operated by remote control so as to avoid the cumbersome, awkward and sometimes dirty work of lowering or raising the stabilizer legs.

Electrically operated stabilizer legs do exist. An example is found in EP-A-2479075. However, if the desire arises to retrofit an older vehicle with electrically operated stabilizer legs, the cost for retrofitting will normally have to be in some proportion to the value of the trailer, and full substitution of all four legs with electrically operated ones is not an economically sensible option.

Rather than full substitution, DK-B-177103 suggests to replace the spindle of a manually operated stabilizer leg with a spindle with an integrated electrical drive. This replacement, however, requires some technical skills and tools and will not be for everyone to do, thus involving costs for professional services. Moreover, this solution is suitable for spindle type stabilizer legs only.

Based on this prior art it is the object to provide a method for retrofitting an electric drive on a stabilizer leg of a vehicle, such as a caravan, a retrofittable electrical drive system for a stabilizer leg of a vehicle, which allow the electrical drive system to be easily retrofitted and does not necessitate special skills or tools for doing so, and accordingly a vehicle retrofitted with such an electrical drive system.

According to a first aspect of the invention, this object is achieved by a method for retrofitting an electric drive on a stabilizer leg attached to a vehicle, characterized in the steps of providing a vehicle having at least one stabilizer leg with operating means with an engagement member having a length and a predetermined cross-sectional shape adapted for engagement with an operating tool, providing an electrical drive comprising an electric motor accommodated in a motor housing part and connected via a flexible transmission to a drive member in a drive part, where the drive member has thickness and a through aperture adapted for engagement with the predetermined cross-sectional shape of the engagement member, and where the thickness of the drive member is less than the length of the engagement member, fitting the drive member over the engagement member along a part of the length of the engagement member, so as to leave at least some of said length of the engagement member protruding through the drive member, securing the position of the drive member with respect to said engagement member, and securing the position of the electric motor with respect to the vehicle.

This method allows an electrical drive to be retrofitted without the use of advanced tools, but solely by the use of a screwdriver and a wrench, and without special practical skills, because no intervention in the existing stabilizer leg is necessary. Moreover, retrofitting in accordance with the invention allows access to the existing engagement member. Accordingly, it allows manual operation in case of power failure or the like even with the retrofitted electrical drive system.

According to a second aspect of the invention, this object is achieved by a retrofittable electrical drive system for operating a stabilizer leg of a vehicle, where the stabilizer leg has an operating means with an engagement member having a length and a predetermined cross-sectional shape adapted for engagement with an operating tool, where the electrical drive comprises an electric motor accommodated in an motor housing part and connected to a drive member via a flexible transmission, characterized in that the drive member has a thickness and a through aperture adapted for engagement with the predetermined cross-sectional shape of the engagement member, and where the thickness of the drive member is adapted to be less than the length of the engagement member so as to allow some of said length of the engagement member to protrude through the drive member for engagement with the operating tool.

Thereby an easily mounted, retrofittable drive system is provided, which may be fitted on a wide range of stabiliser legs and vehicles, because the drive member takes up only little space, and because the flexible transmission facilitates the placing of the motor a at suitable location, largely independent of the actual construction of the vehicle. Moreover the low height of the drive member allows access to the engagement member to be maintained after the drive system has been fitted, thereby still allowing manual operation in case of power failure or the like.

According to a third aspect of the invention, this object is achieved by a vehicle, preferably a trailer, retrofitted with an electrical drive system according to the above.

According to a preferred embodiment of the first aspect of the invention, the drive part with the drive member is attached to a mounting bracket, and the method further comprising the steps of partially detaching the stabilizer leg from the vehicle, fitting the drive member over the engagement member by inserting a side wall part of said mounting bracket between the partially detached stabilizer leg and the vehicle, and securing the position of the drive member by reattaching the partially detached stabilizer leg, thereby clamping the side wall part of the mounting bracket between the stabilizer leg and the vehicle. This further facilitates the mounting of the drive member in the correct position on the engagement member. Moreover the bracket serves to protect the drive member against water, dirt, salt and other harmful substances.

According to another preferred embodiment according to the first aspect of the invention, the electric motor housing is secured directly to the vehicle. Securing the electric motor housing directly to the vehicle is preferable over mounting it on the bracket as in conjunction with the bracket there may, depending on the vehicle construction, not always be sufficient room for the motor housing.

According to a preferred embodiment according to the second aspect of the invention, the drive member is mounted on a bracket adapted to be sandwiched between the stabilizer leg and the vehicle. Thereby the mounting of the drive member in the correct position on the engagement member is facilitated. All that needs to be done is to partially detach the stabilizer leg by loosening the mounting bolts or the like, sliding the bracket between the stabilizer leg and the vehicle until the drive member is in the correct position around the engagement member, and reattaching the partially detached leg. Moreover the bracket serves to protect the drive member against water, dirt, salt and other harmful substances once mounted.

According to a further preferred embodiment of the second aspect of the invention the bracket comprises an end wall part on which the drive member is mounted, and at least one side wall part with an edge from which a oblong cut-out into the side wall part is provided. This allows the bracket to be automatically guided into the right position by the mounting bolts of the stabilizer leg.

According to yet a preferred embodiment of the second aspect of the invention, the drive member is adapted to engagement with an engagement member of hexagonal cross-section. This is advantageous because it will fit most engagement members of stabilizer legs, irrespective of construction or make, because these are generally standardized to a 19 mm hexagonal cross-section. The invention is thus applicable to a wide range of existing stabilizer legs and vehicles. If this does not suffice, the range is further extended when according a further preferred embodiment, the drive member is interchangeable.

According to yet another preferred embodiment, the flexible transmission comprises an infinite loop transmission member. An endless loop is efficient in force transmission, while allowing the motor housing to be placed in numerous locations and orientations with respect to the engagement member of the stabilizer leg, thus facilitation the fitting thereof to the vehicle.

The invention will now be described in greater detail based on non-limiting exemplary embodiments and with reference to the schematic drawing, on which:
Fig. 1 shows a stabilizer leg mounted at a corner of the bottom of a vehicle,
Fig. 2 shows an electrical drive and a mounting bracket according to the invention,
Fig. 3 shows a detail of the stabilizer leg of Fig. 1 with parts cut away for illustration purposes,
Fig. 4 shows the fitting of the electrical drive and mounting bracket of Fig. 2 in accordance with the invention,
Fig. 5 shows the securing of the motor housing of the electric drive on the bottom of the vehicle in accordance with the invention,
Fig. 6 shows a detail of the drive member of the drive part of the electric drive according to the invention, and
Fig. 7 shows an exemplary electrical wiring pattern for the control of four retrofitted electrical drive systems according to the invention.

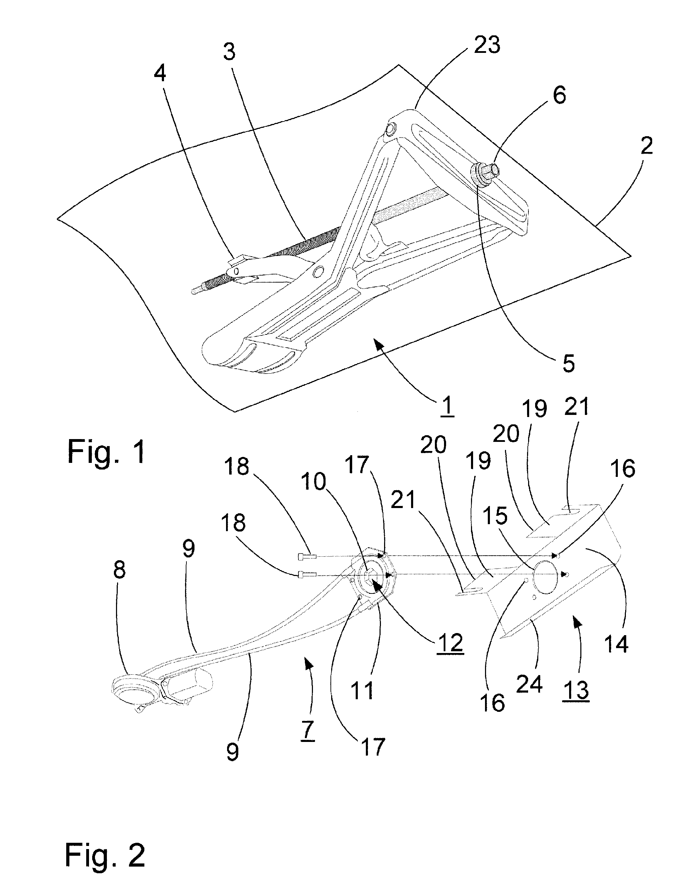

Starting with Fig. 1, a typical stabilizer leg 1 for manual operation is show. Such stabilizer legs 1 are generally well known, and some details which are not of importance to the invention have been omitted. Common to such manually operated stabilizer legs 1, however, is that they comprise an operating means, such as a threaded spindle 3 engaging a wandering nut 4. For turning the spindle 3, the spindle 3 is at one end provided with an engagement member 5 having a length and a predetermined cross-sectional shape adapted for engagement with an operating tool. The predetermined shape can in principle be any suitable one, but for the stabilizer legs 1 used on caravans and motor homes, which formed the starting point for this invention, a 19 mm hexagonal cross-section appears to be the established standard. The length of the engagement member 5 may vary depending on the construction and make of the stabilizer leg 1, e.g. on whether a ball bearing 6 is incorporated in the stabilizer leg 1 or not. In any case the length is sufficient for proper engagement of a manual operating tool, such as a crank with a corresponding socket, or an electrical hand tool provided with a suitable socket, e.g. as suggested in DE-U-29708701, albeit most people nowadays use battery powered universal hand tools when not relying on the manual crank.

The stabilizer leg 1 is schematically shown as attached to the vehicle by being mounted at the corner of a bottom plate 2 thereof. For illustration purposes the bottom plate 2 is drawn as flat, but in fact there may be features of the vehicle, such as supporting beams or flanges surrounding the stabilizer leg 1, as well as edges of the vehicle body limiting access to the stabilizer leg 1 from some angles. Such features depend on the vehicle construction rather than the stabilizer leg 1 itself, but still they may restrict the available space around the stabilizer leg 1, and provide obstacles for retrofitting an electrical drive as an add on, rather than replacing the entire spindle 3 as suggested in DK-B-177103.

The present invention realizes that by using an electrical drive 7 as illustrated in Fig. 2, the replacement of the entire spindle 3 can be avoided, and furthermore the space problems referred to above may be overcome.

The electrical drive 7 comprising an electric motor accommodated in a motor housing part 8, within which the motor is in engagement with a flexible transmission 9. The motor is via the flexible transmission 9 connected to a drive member 10 in a drive part 11. The flexible transmission 9 preferably comprises an infinite loop transmission member. Such a flexible transmission 9 is robust and efficient in transmitting the motor torque to the drive member 10. An electrical drive of this type is per se known from EP-A-199417. As can be seen, the drive member 10 and the drive part 11 are relatively flat. In the preferred embodiment, the drive member 10 has a thickness of only a few mm, e.g. 3 to 4 mm, and the overall thickness of the drive part 11 is only slightly larger, e.g. 5 to 6 mm.

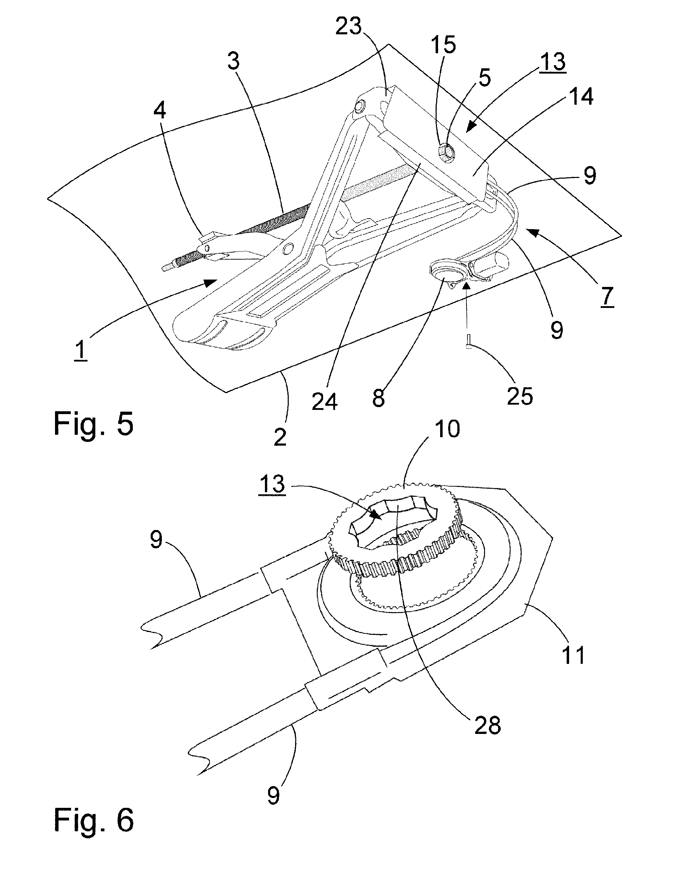

The drive member 10 furthermore comprises a through aperture 12. The through aperture 12 is adapted for engagement with the predetermined cross-sectional shape of the engagement member 5, when according to the invention the drive member 10 is placed around the engagement member 5. For the commonly used 19 mm hexagonal engagement members 5, the aperture 12 may be a simple hexagon, but other shapes, such as twelve-pointed stars may be envisaged. However, because of the electric motor's properties it is preferred to use an aperture as show in Fig. 6, with a six point surface drive shape, i.e. where the perimeter of the aperture comprises six bulges 28, engaging the flanks of the hexagonal engagement member 5 rather than the corners. This shape provides a somewhat loose fit, i.e. with some play, allowing in turn, the electric motor and the flexible transmission to build up some momentum before engaging the engagement member 5, thus aiding in overcoming static friction, not only in the stabiliser leg 1, such as between the spindle 3 and the wandering nut 4, but also in the motor and the flexible transmission themselves. As can also be seen in Fig. 6, the drive member 10 may comprise a loose insert, so as to make it interchangeable, should it be necessary to mount the electrical drive system on a stabilizer leg 1 having an engagement member 5 deviating from the 19 mm hexagonal cross-section mentioned above.

Having a thickness of e.g. 3-5 mm, the thickness of the drive member 10 is substantially less than the length of the engagement member 5, which is typically at least 20 mm, but often more, depending on the make and the construction of the stabiliser leg 1. This allows at least some of the length of the engagement member 5 to protrude through the drive member 10, when according to the invention, the drive member 10 placed around the engagement member 5. This, in turn, allows the access to the engagement member 5 to be maintained and thus the operating member 3 to still be turned using the usual manual tools described above, e.g. in the event of power failure or malfunction of the electrical drive 7.

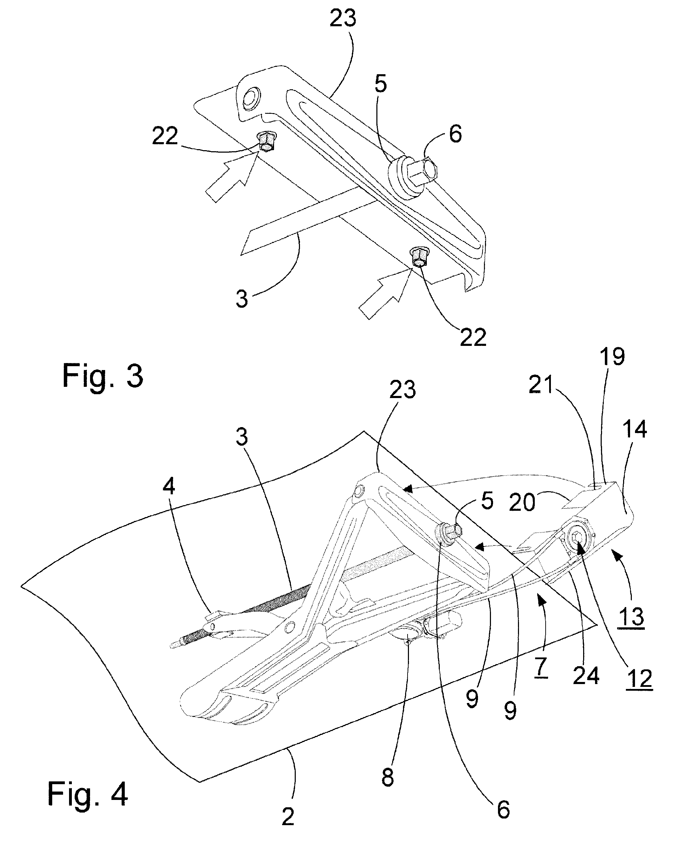

In order to position and secure the drive member 10 in the proper position, where a sufficient length of the engagement member 5 protrudes to be accessible, a mounting bracket 13 is used. The mounting bracket 13 comprises an end wall part 14, which is provided with a central passage 15. Through this central passage 15, the engagement member 5 of a leg protrudes or may be accessed after the electrical drive system has been retrofitted. A number of first mounting holes 16 are arranged around the central passage 15. The location of at least some of these mounting first mounting holes 16 match at least some of a set of second mounting holes 17 provided in the drive part 11. This allows the correct mounting of the drive member 10 of the drive part 11 with respect to the central passage, and, in turn, with respect to the engagement member 5 of the stabilizer leg 1, e.g. by means of screws 18. For this positioning of the drive member 10 with respect to the engagement member 5, the mounting bracket 13 comprises at least one side wall part 19 extending at an angle from the end wall part 14 at an appropriate distance from the central passage 15. The side wall part 19 comprises an edge 20. From the edge 20 an oblong cut-out 21 into the side wall part 19 is provided. Preferably there are two oblong cut-outs 20, adapted to register with the mounting bolts 22 (see Fig. 3), with which the stabilizer leg 1 is attached to the bottom plate 2 or the like of vehicle. The two oblong cut-outs 20 may be provided in two separate parts of the side wall part 19, as shown in Fig. 2, or the side wall part 19 may be one continuous wall accommodating both cut-outs 20.

After the drive part 11 has been mounted on the mounting bracket 13 as shown in Fig. 4, the side wall part 19 of the mounting bracket 13 may be sandwiched between the stabilizer leg 1 and the bottom plate 2 of the vehicle, thereby holding the drive member 10 in the correct position with respect to the engagement member 5. All it takes is to loosen the mounting bolts 22 a little, so as to partially detach the stabilizer leg 1 from the bottom plate 2. The side wall part 19 may then be slid between the stabilizer leg 1 and the bottom plate 2, so that the stems of the mounting bolts 22 are located in the oblong cut-outs 20, thereby securing the correct lateral positioning of the drive member 10 with respect to the engagement member 5. Once the side wall part 19 of the mounting bracket 13 has been slid as far as possible between the stabilizer leg 1 and the bottom plate 2, i.e. until the drive part 11 engages the ball bearing 6 of the stabilizer leg 1 or, depending on the construction, the support 23, the mounting bolts 22 may be tightened again, thereby reattaching the partially detached stabilizer leg 1, clamping the mounting bracket 13, and, in turn, securing the drive member 10 in the correct position. The only tools it takes for doing this, is a suitable screwdriver for the screws 18 and a suitable wrench (or possibly also a screwdriver) for the mounting bolts 22.

Apart from serving as a mounting and positioning means, the mounting bracket 13 also has a protective function against water, dirt, salt and other pollutants that may harm the drive means 10. In order to improve thisthe mounting bracket 13 may comprise further side walls parts 24.

Having mounted the drive part 11 with the drive means 10 in the correct position it remains to secure the motor housing 8. Due to the flexible transmission 9 this may be done in numerous distances from the engagement member 5, depending only on the length of the flexible transmission, and more importantly in any orientation, independently of the extension of the engagement member 5. Finding a suitable location for any vehicle construction or stabilizer leg 1 is thus facilitated. In the embodiment illustrated in Fig. 5, the motor housing is simply attached to the bottom plate 2 by means of a screw 25, but it might just as well have been mounted to a beam or a flange. In particular in respect of the latter, it should be noted that mounting the motor housing 8 using a cable binder or the like may suffice, thus not even necessitating a screwdriver. Rather than attaching the motor housing 8 directly to the vehicle, it may also be attached to vehicle via other suitable intermediate parts, e.g. if necessary looped back and secured to the mounting bracket 13.

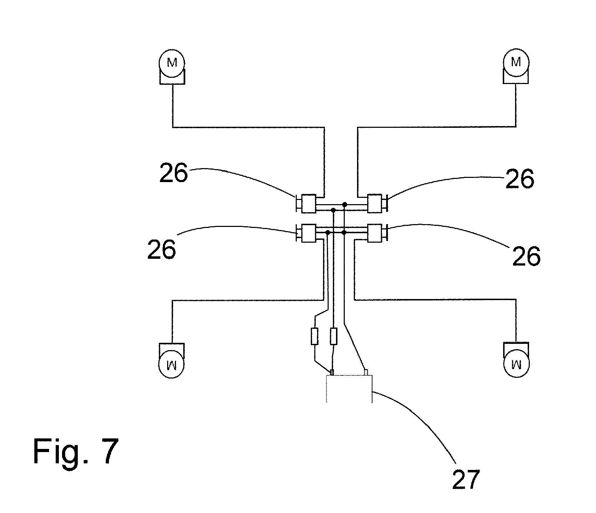

Finally, the retrofitted electrical drive system in accordance with the invention is to be connected to a power supply and control means. This may be done by means of cables and connectors requiring no special skills and is as such independent of the space problems and mechanical problems of retrofitting the electric drive, which the present invention aims at solving. Accordingly, the electrical connections are not considered essential for the invention. However for completeness Fig. 7 shows a schematic wiring diagram illustrating how four motors, one for each stabilizer leg 1, are connected to control switches 26 in a control box, allowing the power supply to the motors to be supplied with DC current from a supply, typically 12V from an automotive battery 27 in a towing car or in the motorhome as the case may be, and allowing the polarity of the current to be reversed in order to both lower and raise the stabilizer legs 1. The control box could be hand held or be mounted at a suitable place e.g. at the door. The control switches may comprise overload sensors allowing automatic reversing of the polarity in case the path of the stabilizer leg 1 is obstructed by an overlooked obstacle. The electrical system may also support illumination of the path of the stabilizer leg 1, e.g. by LEDs mounted on the mounting bracket 13 so at to identify the obstacles rather than overlooking them.

The present invention as described above provides exemplifies a method for retrofitting an electric drive on a stabilizer leg 1 of a vehicle, a retrofittable electrical drive system for a stabilizer leg 1 of a vehicle, and a trailer retrofitted with the electrical drive system. This invention is, however, not limited to the embodiments described, and numerous variants will find place within the scope of the claim. In particular other types of flexible transmissions 9 could be used. Also, the control box could involve communication with a wireless remote control.

## Claims

1. A method for retrofitting an electric drive on a stabilizer leg (1) attached to a vehicle, **characterized in** the steps of
providing a vehicle having at least one stabilizer leg (1) with operating means (3) with an engagement member (5) having a length and a predetermined cross-sectional shape adapted for engagement with an operating tool,
providing an electrical drive (7) comprising an electric motor accommodated in a motor housing part (8) and connected via a flexible transmission (9) to a drive member (10) in a drive part (11), where the drive member (10) has thickness and a through aperture (12) adapted for engagement with the predetermined cross-sectional shape of the engagement member (5), and where the thickness of the drive member (10) is less than the length of the engagement member (5),
fitting the drive member (10) over the engagement member (5) along a part of the length of the engagement member (5), so as to leave at least some of said length of the engagement member (5) protruding through the drive member (10),
securing the position of the drive member (10) with respect to said engagement member (5), and
securing the position of the electric motor with respect to the vehicle.

2. A method according to claim 1, wherein the drive part (11) with the drive member (10) is attached to a mounting bracket (13), and the method further comprising the steps of
partially detaching the stabilizer leg (1) from the vehicle,
fitting the drive member (10) over the engagement member (5) by inserting a side wall part (19) of said mounting bracket (13) between the partially detached stabilizer leg (1) and the vehicle,
and securing the position of the drive member (10) by reattaching the partially detached stabilizer leg (1), thereby clamping the side wall part (19) of the mounting bracket (13) between the stabilizer leg (1) and the vehicle.

3. A method according to any one of claims 1 or 2, wherein the electric motor housing (8) is secured directly to the vehicle.

4. A retrofittable electrical drive system for operating a stabilizer leg (1) of a vehicle, where the stabilizer leg (1) has an operating means (3) with an engagement member (5) having a length and a predetermined cross-sectional shape adapted for engagement with an operating tool,
where the electrical drive (7) comprises an electric motor accommodated in a motor housing part (8) and connected to a drive member (10) via a flexible transmission (9), **characterized in that**
the drive member (10) has a thickness and a through aperture adapted for engagement with the predetermined cross-sectional shape of the engagement member (5), and
where the thickness of the drive member (10) is adapted to be less than the length of the engagement member (5) so as to allow some of said length of the engagement member (5) to protrude through the drive member (10) for engagement with the operating tool.

5. A retrofittable electrical drive system according to claim 4, wherein the drive member (10) is mounted on a mounting bracket (13) adapted to be sandwiched between the stabilizer leg (1) and the vehicle.

6. A retrofittable electrical drive system according claim 5, wherein the bracket comprises an end wall part (14) on which the drive member is mounted, and at least one side wall part (19) with an edge (20) from which a oblong cut-out (21) into the side wall part (19) is provided.

7. A retrofittable electrical drive system according to any one of claims 4 to 6, wherein the drive member (10) is adapted to engagement with an engagement member of hexagonal cross-section.

8. A retrofittable electrical drive system according to any one of claims 4 to 7, wherein the drive member (10) is interchangeable.

9. A retrofittable electrical drive system according to any one of claims 4 to 8, wherein the flexible transmission (9) comprises an infinite loop transmission member.

10. A vehicle, preferably a trailer, retrofitted with an electrical drive system according to any one of claims 4 to 9.
